# EUROPEAN PATENT SPECIFICATION

(11) **EP 0 730 118 B1**
(45) Date of publication and mention of the grant of the patent: **13.06.2001**
(21) Application number: 96301207.5
(22) Date of filing: 22.02.1996
(51) Int. Cl.: F16L 47/02, B29C 65/34

(54) **Weldable pipe fittings and methods of forming the same**
Schweissrohrverbindung und Verfahren zu ihrer Herstellung
Raccord soudable pour tuyau et procédé pour son obtention

(30) Priority: 02.03.1995 GB 9504175
(43) Date of publication of application: 04.09.1996
(73) Proprietor: RUTLAND PLASTICS LIMITED, Oakham Rutland Leicestershire LE15 6NU (GB)
(72) Inventor: Beechey, Robert Edward, Oakham, Leicestershire LE15 6PJ (GB)
(74) Representative: Hutchins, Michael Richard

(56) References cited:
- US-A- 4 455 482
- US-A- 4 493 985
- US-A- 4 915 417
- US-A- 5 030 489

## Description

This invention relates to weldable plastics pipe fittings, by which is meant plastics fittings for connection to plastic pipes in which part of an "inner" peripheral wall of the fitting is arranged to be joined by fusion or "welding" to a part of an outside peripheral wall of a pipe or pipe-like member. The invention also relates to methods of forming such pipe fittings.

It is to be understood that by the expression "pipe" as used herein is meant any pipe-like member such as a pipe as such, and also pipe fittings such as "T"-junctions, elbows, bends, reducers, branch and valve inlets, for example.

Such weldable plastics pipe fittings may in one form comprise a sleeve-like member, the inner or fusion wall of which is intended to be welded to the outer peripheral wall of the pipe, in which case the fitting may comprise a coupling for connecting by such welding techniques two pipes together, or an end cap to the pipe for example. In another form the plastics pipe fitting may comprise a saddle type or shaped member having an inner or fusion wall arranged to be welded to part of the outside peripheral wall of a main pipe, the saddle member having an opening therethrough to the outer peripheral wall of the main pipe, the saddle constituting, upon providing a corresponding opening through the wall of the pipe, a fitting for coupling a side-pipe to the main pipe.

It has been proposed to provide plastics fittings of these kinds in which, in the case of a sleeve, a helical groove is formed around the inner or fusion wall of the fitting from an outer part to an inner part thereof within which is located an electrically conducting wire, and in the case of the saddle fitting a spiral groove is formed in the fusion wall from an outer part to an inner part thereof around the opening therethrough within which an electrically conducting wire is located, so that in both cases when in use the fitting is placed with its fusion in mating disposition about or upon a thermoplastic pipe and electric current passed through the electric heating wire, melting of the closely adjacent mating plastics surfaces of the fitting and pipe occurs, fusing the two bodies together.

In US 4 493 985 A, a fitting is disclosed comprising a sleeve incorporating an electrical resistance wire extending around said sleeve and a melting material positioned between the ends of the said wire. The material melts when the energy necessary for welding the sleeve is developed. US 4 915 417 A discloses a fitting comprising a receptacle and an electrical heating coil fitted therein. The pipe to be joined to the fitting can slide into the heating coil. When current passes through the coil, the adjacent plastics material melts and the opposing faces of the fitting and pipe fuse. Compression of the fitting onto the pipe by application of a clamp further strengthens the join.

With all such fittings, it is necessary that the ends of the electrical wire through which the heating current passes should be located in such disposition on the fitting as to enable the provision of terminals capable of connection at each end to an electrical power source. With respect to fittings of the kind to which this invention relates comprising a sleeve-like member for connecting two pipes together, this can be done by arranging for the helical groove, and hence its included heating wire, to pass from one end of the sleeve to the other, the helix being close spaced at two heating zones near each end of the sleeve, and wide spaced in between. However in many instances such an arrangement is not convenient, or indeed is not possible, such as in relation to the spiral groove provided around the opening in a saddle fitting, or where the fitting comprises a closed-off sleeve with integral end cap to a pipe or pipe-like member. In such cases a terminal connected at the inner side or part of the helical or spiral heating wire defining a heating zone would inevitably provide a weakness and potential fluid leakage from within the pipe and fitting.

Whilst various attempts have been made to provide a layout of groove and heating wire to overcome this problem, such efforts hitherto have given rise to problems of their own, such as potential problems associated with the risk of short circuiting of the heating wire, particularly during any movement (primarily parallel to the fusion wall) of the melted material of the plastics fitting during the fusion process, thereby rendering areas of the joint to be not fused.

It is an object of the present invention to overcome or at least substantially reduce the above mentioned problems.

According to one aspect of the present invention there is provided a weldable plastics pipe fitting in which a groove, at least the majority of which is helical or spiral, is disposed in on a fusion wall of the fitting, from an outer part to an inner part thereof and an electrical heating wire is located within the groove and connected at each end to an input/output terminal, wherein a lead-in portion of the groove is disposed entering from the outer part of the fitting to the inner part, and a lead-in portion of the electrical wire located therein is buried beneath the surface of the fusion wall throughout at least the majority of its length at a depth which at its least is substantially more than the diameter of the heating wire, and wherein a helical or spiral portion of the groove continuing from the lead-in portion thereof runs from the inner part of the fitting to the outer part, the heating wire laid therein being located such as to be at or adjacent the surface of the fusion wall of the fitting, the terminals for each end of the heating wire being disposed on the fitting at or adjacent the outer part thereof, and the helical or spiral portion of the groove, and the wire disposed therein, overlying the lead-in portion of the wire and the groove.

According to another aspect of the present invention there is provided a method of forming a weldable plastics pipe fitting in which a groove, at least the majority of which is helical or spiral, is formed in a fusion wall of the fitting, from an outer part to an inner part thereof and an electrical heating wire is laid within the groove and connected at each end to an input/output terminal, wherein a lead-in portion of the groove is formed from the outer part of the fitting to the inner part, and a lead-in portion of the electrical wire is laid therein such as to be buried throughout at least the majority of its length beneath the surface of the fusion wall at a depth which at its least is substantially more than the diameter of the heating wire, and wherein a helical or spiral portion of the groove continuing from the lead-in portion thereof is then cut from the inner part of the fitting to the outer part, and the heating wire laid therein such as to be at or adjacent the surface of the fusion wall of the fitting, the terminals for each end of the heating wire being disposed on the fitting at or adjacent the outer part thereof, and the helical or spiral portion of the groove, and the wire disposed therein, overlying the lead-in portion of the wire and the groove.

The fitting as hereinabove defined may be provided with its two portion groove and its laid-in heating wire in one step. Thus, the heating wire may be laid in to the groove as it is formed by a groove cutting tool or a member associated therewith.

Excess plastics material, and distortions of the fusion wall of the fitting may be removed by working the fusion wall of the fitting, such as by machining, so as to ensure removal of such excess material from the edges of the surface grooves, and to ensure full coverage of the buried lead-in portion of the heating wire.

With a weldable plastics pipe fitting comprising a sleeve, the lead-in wire and its containing portion of the groove in the inner fusion wall may be in the form of a gentle curve which may be helical from a terminal position of the wire at or adjacent the axially outer part of the fitting to the ancillary inner part of the heating portion of the fitting and may be buried at a depth of substantially more than the diameter of the heating wire, whereafter the groove and its included wire turns around the inner fusion wall of the sleeve again in a close spaced helix to the outer part and to a second terminal located at or adjacent thereto.

With respect to a fitting of the saddle type, the lead-in portion of the groove and wire may again be in the form of a gradual curve which may be spiral from a first terminal at or adjacent the radially outer part of the fitting to a radially inner part marking the end of the heating zone, again at a depth substantially more than the diameter of the heating wire, whereafter the groove and included wire, at or just below surface level is formed in a spiral outwardly to a second terminal at or adjacent the radially outer part of the fitting.

In a preferred embodiment of the invention at least the majority of the lead-in portion of the heating wire may be at a depth of between one and a half and two and a half times the diameter of the heating wire, such as at two times such diameter in depth.

In order that the invention may be more readily understood two embodiments of the invention will now be described by way of example with reference to the accompanying drawings in which:-
Figure 1 is a schematic representation of a previous form of wiring in a saddle fitting;
Figure 2 is a schematic representation of heating wire disposition in accordance with the invention in a saddle fitting;
Figure 3 is a schematic representation showing a sleeve-type plastics fitting incorporating heating wire disposed therewithin in accordance with the invention;
Figure 4 is an end view of the fitting of Figure 3;
Figures 5(a), (b), (c), (d) are sections on the lines "A", "B", "C", "D" of Figure 4;
Figure 6 is a section through part of the fitting of Figure 3 with a pipe wall disposed therewithin prior to heating; and
Figure 7 is a similar section to Figure 7 after the heating and fusion of the fitting to the pipe.

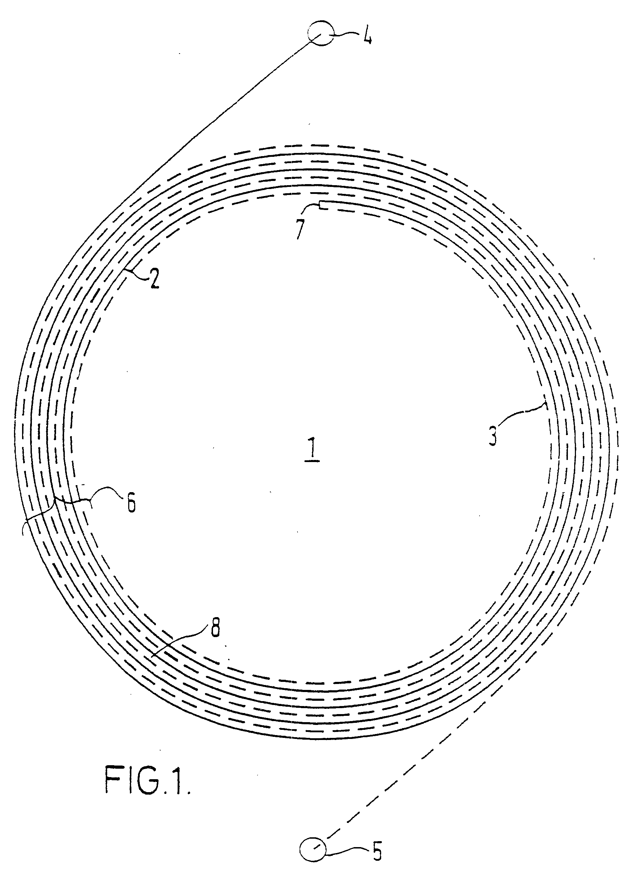

Referring now to Figure 1 it will be seen that a heating wire 2, 3 is set out therein in a spiral form and is in fact in the configuration of a closed-end bipolar loop having an ingoing part 2 and an outgoing part 3, so that in practice on the saddle fitting 1 the heating wire runs from a first terminal 4 adjacent the radially outer part of the fitting in a decreasing spiral, round an opening (not shown) at the centre of the fitting, to the radially inner part of a heating zone 6 within a groove cut appropriately therefor, in the fusion wall (not shown) of the fitting and returns in parallel increasing spiral grooves, to a second terminal adjacent the radially outer part ofthe fitting. Such an arrangement involves difficulties in laying the heating wire, particularly at the "turn-round" point 7 at the radially innermost portion thereof, but even more seriously, due at least partly to the tendency of molten plastics material from the fitting during the fusion process, and hence the included heating wire, to move primarily parallel to the fusion wall, involves a serious short-circuiting problem, in that should incoming and outgoing adjacent parts of the wire contact and short-circuit at, say, a position 8 halfway across the heating zone, the radially outer part ofthe heating wire will continue to heat, whilst the inner part will fail to do so. Hence the fitting will be fused over the radially outer portion of the heating zone but not at the radially inner, thereby giving a false impression of secure fusion between the fitting and the pipe on which it is mounted, leading to the possibility in use of leakage and failure generally of the fitting on the pipe.

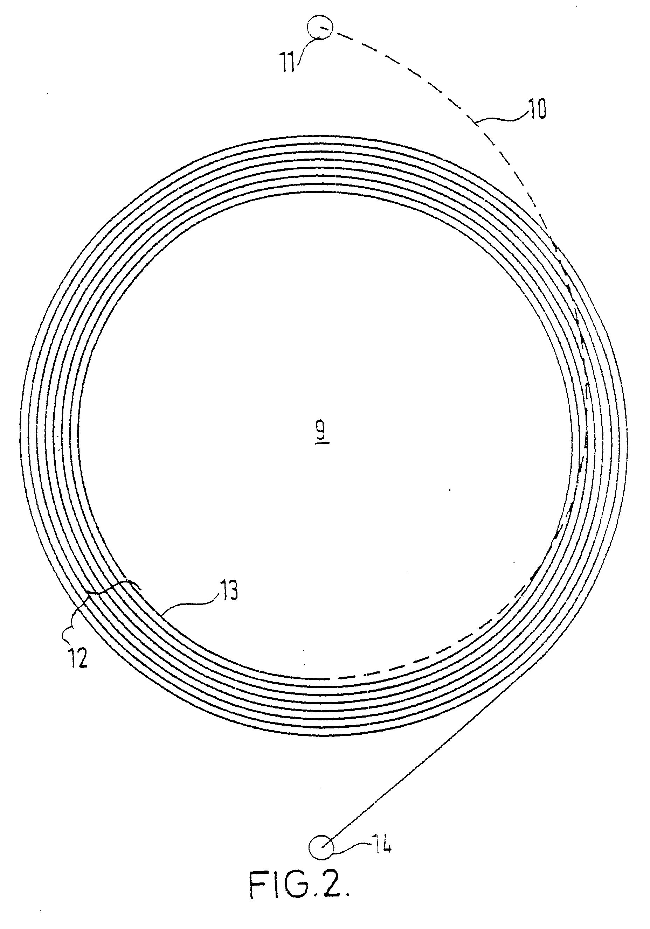

Figure 2 represents schematically the wiring of a saddle-type fitting similar to that represented in Figure 1, but in this case incorporating an arrangement of grooving and wiring in accordance with the present invention. Thus a lead-in part 10 of a heating wire, from a first terminal 11, is laid in a gently curving half-spiral groove as it is formed in the fusion wall (not shown) of the fitting from the radially outer part of the fitting to the inner part of a heating zone 12 thereof, the groove being such that the heating wire in this lead-in portion of the wire is at all points across the heating zone at a depth of approximately one and a half times the diameter of the heating wire. On reaching the innermost part of the heating zone, the groove and the wire laid therein are raised close to the fusion wall surface (not shown) and are then traversed outwardly in a spiral 13 around the fusion wall of the fitting such that the wire lies at or adjacent the surface of such fusion wall and therefore passes above the lead-in portion 10 of the heating wire, which is safely insulated therefrom by the wall thickness therebetween, to a second terminal 14. It is to be observed that since, as noted above, movement of molten plastics material of the fitting during fusion is predominantly parallel to the fusion wall, the disposition of the lead-in portion of the heating wire below the heating zone 12 portion of the wire, reduces very greatly any risk of short circuiting between the two portions 10 and 12.

Any flaps or similar disturbed material at the surface of the internal wall of the fitting may be then removed by milling or similar mechanical working so as to ensure location of the spiral portion of the heating wire at or closely adjacent the surface of the inner wall of the fitting.

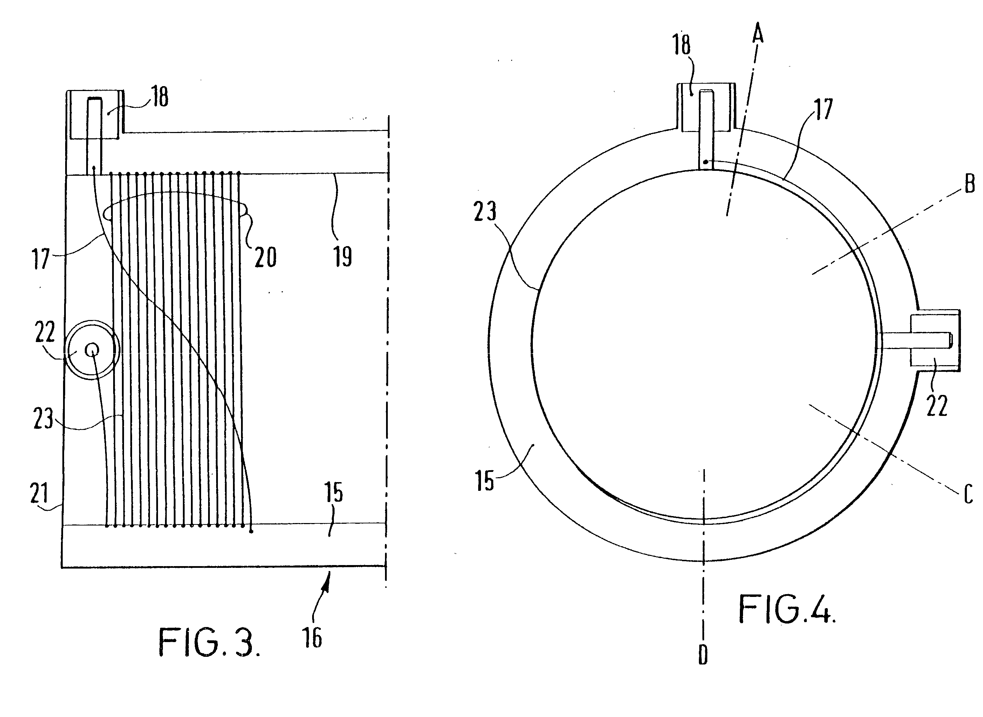

Figures 3 to 7 of the drawings illustrate a sleeve-type weldable plastics pipe fitting. The fitting may, for example, be a double ended fitting arranged to connect at each end to a pipe disposed within that end of the sleeve-like fitting.

Figure 3 shows one end 15 of such a fitting 16 in which, in accordance with the invention, a lead-in portion 17, connecting from a first external input/output terminal 18, of heating wire is laid in a half-helical groove as it is cut by a cutting tool (not shown) at a depth substantially below the surface of the infusion wall 19 of the sleeve at a depth such that the lead-in portion 17 of the heating wire is at all points over a heating zone 20 approximately at its least, twice the diameter of the heating wire below the surface of the fusion wall 19. On reaching the inner part of the heating zone of the sleeve, the cutting tool is then raised to adjacent the surface of the fusion wall 19 of the sleeve and moved in a close pitched helix 23 to the outer end 21 of the sleeve, the wire disposed therein being thereby adjacent the surface of the inner wall 19 of the sleeve, the heating wire therein connecting to a second input/output terminal 22 protruding from the outer side of the sleeve. It is to be appreciated that with a double ended fitting, the ends of the fitting can, by means of the invention, be welded in separate operations to two pipe ends. With large and heavy pipes and fittings this is of great benefit to on-site operators.

Although with reference to Figures 2 and 3 the lead-in portion 10, 17 is said to comprise a half-spiral or a half-helix, this lead-in configuration can vary considerably, depending upon, amongst other things, the operational requirements of the cutting tool used for its formation. Thus in alternative arrangements, for example, the lead-in portion may comprise one or two spiral or helical turns.

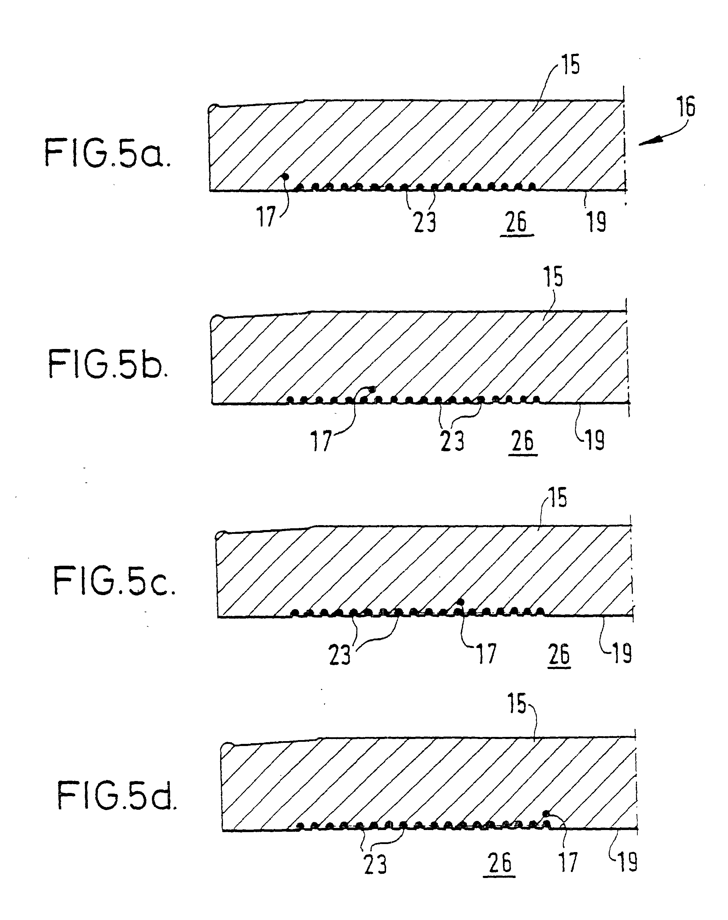

Figures 5 (a), (b), (c) and (d), which comprise the sections on lines "A", "B ", "C" and "D" of Figure 3 clearly show the lead-in portion 17 of the heating wire in its disposition buried beneath the inner wall 19 of the sleeve 16. The depth of the lead-in portion is, at its least, not less than approximately twice the diameter of the heating wire across the heating zone 20. These sections also show the helically wound portion 23 of the heating wire laying closely adjacent to the surface of the inner wall 19 of the sleeve, and indeed having a significant part of its surface exposed to the interior 26 of the sleeve.

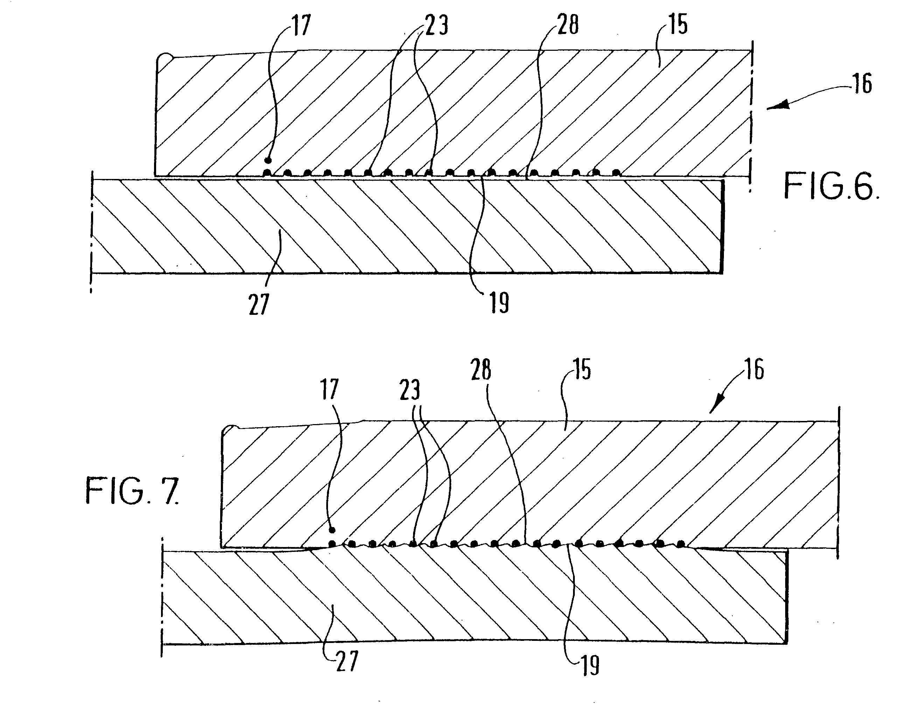

As can clearly be seen from Figure 6, the sleeve fitting 16 is manufactured to an adequate tolerance to provide a narrow gap about a pipe 27 to which it is to be fused in the function of use of the fitting in connection to a pipe end. After such fitting, the terminals 18, 22 are connected across a power source which thereby heats the heating wire over the heating zone 20, and fuses together the plastics material adjacent the inner wall 19 of the fitting 16 at the heating zone 20 and part of the outer wall 28 of the pipe adjacent the heating zone.

By means of the invention we have provided a safe and effective means of providing plastics pipe fittings incorporating helical or spiral wound heating wires for heating zones in which the two ends of the heating wire can be located at a convenient position at the outer part of the fitting with greatly reduced risk of short-circuiting the heating wire.

## Claims

1. A weldable plastics pipe fitting (16) in which a groove, at least the majority of which is helical or spiral, is disposed in or on a fusion wall (19) of the fitting (16), from an outer part to an inner part thereof and an electrical heating wire is located within the groove and connected at each end to an input/output terminal (18 and 22), the heating wire being located such as to be at or adjacent the surface of the fusion wall (19) of the fitting (16), the terminals (18 and 22) for each end of the heating wire being disposed on the fitting (16) at or adjacent the outer part thereof,
characterised in that,
a lead-in portion of the groove is disposed entering from the outer part of the fitting to the inner part, and a lead-in portion of the electrical wire (17) located therein is buried beneath the surface of the fusion wall (19) throughout at least the majority of its length at a depth which at its least is substantially more than the diameter of the heating wire, and wherein a helical or spiral portion of the groove continuing from the lead-in portion thereof runs from the inner part of the fitting to the outer part; the helical or spiral portion of the groove, and the wire disposed therein, overlying the lead-in portion of the wire (17) and the groove.

2. A plastics pipe fitting (16) as claimed in Claim 1 wherein the pipe fitting (16) comprises a sleeve, the lead-in wire (17) and its containing portion of the groove in the inner fusion wall (19) being in the :form of a gentle curve from a first terminal (18) at or adjacent to the axially outer part of the fitting to an axially inner part of the heating zone (20) of the fitting (16).

3. A fitting (16) as claimed in Claim 2 wherein the lead-in portion of the wire (17) is in the form of a part of a helix or a number of helices.

4. A fitting (16) as claimed in Claim 2 or Claim 3 wherein beyond the lead-in portion of the heating wire (17) the groove and its included wire returns across the heating zone (20) around the inner fusion wall (19) of the sleeve in a close-pitched helix (23) to the outer part thereof to a second terminal (22) located at or adjacent thereto.

5. A fitting (16) as claimed in Claim 1 of the saddle-type wherein the lead-in portion of the groove and wire (17) are in the form of a gradual curve from a first terminal (18) at or adjacent the radially outer part of the fitting (16) to a radially inner part of the end of the heating zone (20) of the fitting (16).

6. A fitting (16) as claimed in Claim 5 wherein the lead-in portion of the wire (17) is in the form of part of a spiral or a number of spirals.

7. A fitting (16) as claimed in Claim 5 or 6 wherein beyond the lead-in portion of the heating wire (17) the groove and its included wire (17) returns across the hearing zone (20) on the fusion wall (19) in a close-pitched spiral radially outwardly to a second terminal (22) at or adjacent the radially outer part of the fitting (16).

8. A fitting (16) as claimed in any one of the preceding Claims wherein at least the majority of the lead-in portion of the heating wire (17) is at its least at a depth between one and a half and two and a half times the diameter of the heating wire.

9. A fitting (16) as claimed in Claim 8 wherein the heating wire is at a depth of approximately two times the depth of the diameter of the heating wire.

10. A method of forming a weldable plastics pipe fitting (16) in which a groove, at least the majority of which is helical or spiral, is formed in a fusion wall (19) of the fitting (16), from an outer part to an inner part thereof and an electrical heating wire is laid within the groove and connected at each end to an input/output terminal (18 and 22), the heating wire such as to be at or adjacent the surface of the fusion wall (19) of the fitting (16), the terminals for each end (18 and 22) of the locating wire being disposed on the fitting (16) at or adjacent the outer part thereof,
characterised in that,
a lead-in portion of the groove is formed from the outer part of the fitting (16) to the inner part, and a lead-in portion of the electrical wire (17) is laid therein such as to be buried throughout at least the majority of its length beneath the surface of the fusion wall (19) at a depth which at its least is substantially more than the diameter of the heating wire, and wherein a helical or spiral portion ofthe groove continuing from the lead-in portion thereof is then cut from the inner part of the fitting (16) to the outer part; the helical or spiral portion of the groove, and the wire disposed therein, overlying the lead-in portion of the wire (17) and the groove.

## Patentansprüche

1. Schweißbares Plastik-Rohr-Verbundstück (16), bei dem eine Nut, von der wenigstens der Hauptteil schraubenförmig oder spiralförmig ausgebildet ist, in oder an einer Anschlußwand (19) des Verbundstückes (16) von einem äußeren Teil nach einem inneren Teil hiervon verlaufend angeordnet ist und ein elektrischer Heizdraht in die Nut eingelegt und an jedem Ende mit einem Eingangs/Ausgangs-Anschluß (18, 22) verbunden ist, wobei der Heizdraht derart angeordnet ist, daß er an der Oberfläche der Anschlußwand (19) des Verbundstückes (16) oder in der Nähe hiervon zu liegen kommt, und wobei die Anschlüsse (18, 22) an jedem Ende des Heizdrahtes am Verbundstück (16) oder benachbart zu seinem äußeren Teil angeordnet sind,
dadurch gekennzeichnet, daß
ein Einführungsabschnitt der Nut so angeordnet ist, daß er vom äußeren Teil des Verbundstückes nach dem inneren Teil führt und ein Einführungsabschnitt des elektrischen Drahtes (17) darinnen unter der Oberfläche der Anschlußwand (19) über wenigstens den Hauptteil der Länge in einer Tiefe eingebettet ist, die wenigstens wesentlich größer ist als der Durchmesser des Heizdrahtes, und daß ein schraubenlinienförmiger oder spiralförmiger Abschnitt der Nut sich von dem Einführungsabschnitt fortsetzt und von dem inneren Teil des Verbundstückes nach seinem äußeren Teil verläuft, wobei der schraubenlinienförmige oder spiralförmige Abschnitt der Nut und der darin befindliche Draht über dem Einführungsabschnitt des Drahtes (17) und die Nut zu liegen kommen.

2. Plastik-Rohr-Verbundstück (16) nach Anspruch 1, bei welchem das Rohr-Verbundstück (16) aus einer Hülse besteht und der Einführungsdraht (17) und sein in der Nut in der inneren Anschlußwand (19) enthaltene Abschnitt in Form einer leichten Kurve von dem ersten Anschluß (18) an oder benachbart zu dem axial äußeren Teil des Verbundstücks nach einem axial inneren Teil der Heizzone (20) des Verbundstückes (16) verläuft.

3. Verbundstück (16) nach Anspruch 2, bei welchem der Einführungsabschnitt des Drahtes (17) die Form eines Teils einer Schraubenlinie oder einer Anzahl von Schraubenlinien aufweist.

4. Verbundstück (16) nach den Ansprüchen 2 oder 3, bei welchem unter dem Einführungsabschnitt des Heizdrahtes (17) die Nut und der von ihr umschlossene Draht über die Heizzone (20) und um die innere Anschlußwand (19) der Hülse in Form einer Schraubenlinie (23) mit geringer Steigung nach dem äußeren Teil und einem zweiten Anschluß (22) zurückgeführt ist, der dort oder benachbart hierzu angeordnet ist.

5. Verbundstück (16) nach Anspruch 1 in Form eines Sattels, bei welchem der Einführungsabschnitt der Nut und der Draht (17) in Form einer graduellen Kurve von einem ersten Anschluß (18) an oder in der Nähe des radial äußeren Teils des Verbundstückes (16) nach einem radial inneren Teil des Endes der Heizzone (20) des Verbundstückes (16) verlaufen.

6. Verbundstück (16) nach Anspruch 5, bei welchem der Einführungsabschnitt des Drahtes (17) in Form eines Teils einer Spirale oder in Form mehrerer Spiralwindungen ausgebildet ist.

7. Verbundstück (16) nach Anspruch 5 oder 6, bei welchem über dem Einführungsabschnitt des Heizdrahtes (17) die Nut und der von ihr umschlossene Draht (17) über die Heizzone (20) an der Anschlußwand (19) in einer engen Spirale radial nach außen nach einem zweiten Anschluß (22) an dem äußeren Teil des Verbundstückes oder in der Nähe hiervon zurückkehren.

8. Verbundstück (16) nach einem der vorhergehenden Ansprüche, bei welchem wenigstens der Hauptteil des Einführungsabschnitts des Heizdrahtes (17) sich wenigstens in einer Tiefe befindet, die zwischen dem 1 1/2-fachen und dem 2 1/2-fachen des Durchmessers des Heizdrahtes liegt.

9. Verbundstück (16) nach Anspruch 8, bei welchem sich der Heizdraht in einer Tiefe befindet, die etwa dem doppelten Durchmesser des Heizdrahtes entspricht.

10. Verfahren zur Herstellung eines schweißbaren Plastik-Rohr-Verbundstückes (16), bei welchem eine Nut, von der wenigstens der Hauptteil schraubenlinienförmig oder spiralförmig verläuft in einer Anschlußwand (19) des Verbundstückes (16) von einem äußeren Teil nach einem inneren Teil verlaufend ausgebildet wird und ein elektrischer Heizdraht in die Nut eingelegt und an seinen Enden mit einem Eingangs/Ausgangs-Anschluß (18 und 22) verbunden wird, wobei der Heizdraht derart angeordnet wird, daß er an der Oberfläche der Anschlußwand (19) des Verbundstückes (16) oder in der Nähe hiervon zu liegen kommt und die Anschlüssse (18 und 22) für jedes Ende des Drahtes auf dem Verbundstück (16) an dem äußeren Teil oder in der Nähe hiervon angeordnet werden,
dadurch gekennzeichnet, daß
ein Einführungsabschnitt der Nut von dem äußeren Teil des Verbundstückes (16) nach dem inneren Teil ausgeformt wird, daß ein Einführungsabschnitt des elektrischen Drahtes darin derart eingebettet wird, daß er über wenigstens den Hauptteil seiner Länge unter der Oberfläche der Anschlußwand (19) in einer Tiefe zu liegen kommt, die wenigstens größer ist als der Durchmesser des Heizdrahtes und wobei ein schraubenförmiger oder spiralförmiger Abschnitt der Nut, der sich von dem Einführungsabschnitt fortsetzt, dann von dem inneren Teil des Verbundstückes (16) nach dem äußeren Teil hin abgeschnitten wird, wobei der schraubenlinienförmige oder spiralförmige Abschnitt der Nut und der darin befindliche Draht über dem Einführungsabschnitt des Drahtes (17) und die Nut zu liegen kommen.

## Revendications

1. Raccord soudable (16) pour un tuyau en matière plastique dans lequel une rainure, dont au moins la majeur partie est de forme hélicoïdale ou en spirale, est disposée dans ou sur une paroi (19) du raccord (16) visée par la fusion depuis sa partie externe jusqu'à sa partie interne, et un fil métallique de chauffage électrique est disposé à l'intérieur de la rainure et est relié, à chaque extrémité, à une borne d'entrée/de sortie (18 et 22), le fil métallique de chauffage étant disposé de telle sorte qu'il se trouve contre ou en position adjacente à la surface de la paroi (19) du raccord (16) visée par la fusion, les bornes (18 et 22) pour chaque extrémité du fil métallique de chauffage étant disposées sur le raccord (16) contre ou en position adjacente à la partie externe de ce dernier,
caractérisé en ce que
la portion d'entrée de la rainure est disposée de telle sorte qu'elle s'étend depuis la partie externe du raccord jusqu'à la partie interne et la portion d'entrée du fil électrique (17) qui y est disposée est enfouie en dessous de la surface de la paroi (19) visée par la fusion sur au moins la majeure partie de sa longueur à une profondeur qui est au moins essentiellement supérieure au diamètre du fil métallique de chauffage, et dans lequel la portion hélicoïdale ou en spirale de la rainure qui prolonge la portion d'entrée de cette dernière s'étend depuis la partie interne du raccord jusqu'à la partie externe, la portion hélicoïdale ou en spirale de la rainure, ainsi que le fil métallique qui y est disposé, recouvrant la portion d'entrée du fil métallique (17) et de la rainure.

2. Raccord (16) pour un tuyau en matière plastique selon la revendication 1, dans lequel le raccord de tuyau (16) comprend un manchon, le fil métallique d'entrée (17) et la portion de la rainure qui le contient dans la paroi interne (19) visée par la fusion prenant la forme d'une légère courbe depuis la première borne (18) contre ou en position adjacente à la partie externe du raccord en direction axiale jusqu'à la partie interne de la zone de chauffage (20) du raccord (16) en direction axiale.

3. Raccord (16) selon la revendication 2, dans lequel la portion d'entrée du fil métallique (17) prend la forme d'une partie d'une hélice ou de plusieurs hélices.

4. Raccord (16) selon la revendication 2 ou 3, dans lequel, au-delà de la portion d'entrée du fil métallique de chauffage (17), la rainure et le fil métallique qui y est inclus retourne, en passant par la zone de chauffage (20) autour de la paroi interne (19) du manchon visée par la fusion sous la forme d'une hélice (23) à pas serré jusqu'à sa partie externe, en direction de la deuxième borne (22) disposée contre ou en position adjacente à cette dernière.

5. Raccord (16) selon la revendication 1, en forme de selle, dans lequel la portion d'entrée de la rainure et du fil métallique (17) prend la forme d'une courbe progressive depuis la première borne (18) contre ou en position adjacente à la partie externe du raccord (16) en direction radiale jusqu'à la partie interne de l'extrémité de la zone de chauffage (20) du raccord (16) en direction radiale.

6. Raccord (16) selon la revendication 5, dans lequel la portion d'entrée du fil métallique (17) prend la forme d'une partie d'une spirale ou de plusieurs spirales.

7. Raccord (16) selon la revendication 5 ou 6, dans lequel, au-delà de la portion d'entrée du fil métallique (17), la rainure et le fil métallique qui y est inclus (17) retourne, en passant par la zone de chauffage (20) sur la paroi (19) visée par la fusion sous la forme d'une spirale à pas serré vers l'extérieur en direction radiale jusqu'à la deuxième borne (22) contre ou en position adjacente à la partie externe du raccord (16) en direction radiale.

8. Raccord (16) selon l'une quelconque des revendications précédentes, dans lequel au moins la majeure partie de la portion d'entrée du fil métallique de chauffage (17) se trouve au moins à une profondeur s'étendant entre une fois et demi et deux fois et demi le diamètre du fil métallique de chauffage.

9. Raccord (16) selon la revendication 8, dans lequel le fil métallique de chauffage se trouve à une profondeur correspondant approximativement à deux fois la profondeur du diamètre du fil métallique de chauffage.

10. Procédé de fabrication d'un raccord soudable (16) pour un tuyau en matière plastique, dans lequel on forme une rainure, dont au moins la majeure partie est de forme hélicoïdale ou en spirale, dans une paroi (19) du raccord (16) visée par la fusion, depuis sa partie externe jusqu'à sa partie interne et on dépose un fil métallique de chauffage électrique à l'intérieur de la rainure et on le relie, à chaque extrémité, à une borne d'entrée/de sortie (18 et 22), le fil métallique de chauffage étant disposé de façon à se trouver contre ou en position adjacente à la surface de la paroi (19) du raccord (16) visée par la fusion, les bornes pour chaque extrémité (18 et 22) du fil métallique de chauffage étant disposées sur le raccord (16) contre ou en position adjacente à la partie externe de ce dernier,
caractérisé en ce que
on forme une portion d'entrée de la rainure depuis la partie externe du raccord (16) jusqu'à la partie interne, et on y dépose une portion d'entrée du fil métallique électrique (17) de telle sorte qu'il est enfoncé sur au moins la majeure partie de sa longueur en dessous de la surface de la paroi (19) visée par la fusion à une profondeur qui est au moins essentiellement supérieure au diamètre du fil métallique de chauffage, et dans lequel on coupe alors une portion hélicoïdale ou en spirale de la rainure prolongeant la portion d'entrée de cette dernière depuis la partie interne du raccord (16) jusqu'à la partie externe, la portion hélicoïdale ou en spirale de la. rainure et du fil métallique qui est disposé recouvrant la portion d'entrée du fil métallique (17) et de la rainure.
